(19) **Europäisches Patentamt / European Patent Office / Office européen des brevets**

(11) **EP 4 567 477 A1**

(12) # EUROPEAN PATENT APPLICATION
published in accordance with Art. 153(4) EPC

(43) Date of publication:
**11.06.2025 Bulletin 2025/24**

(21) Application number: **23850169.6**

(22) Date of filing: **04.08.2023**

(51) International Patent Classification (IPC):
**G02B 3/00** (2006.01)    **G02B 5/02** (2006.01)

(52) Cooperative Patent Classification (CPC):
**G02B 3/00; G02B 5/02**

(86) International application number:
**PCT/JP2023/028540**

(87) International publication number:
**WO 2024/029616 (08.02.2024 Gazette 2024/06)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **05.08.2022 JP 2022125808**

(71) Applicant: **Scivax Corporation**
**Kawasaki-shi, Kanagawa 212-0032 (JP)**

(72) Inventors:
- **NAKAMURA Tomonori**
  **Kawasaki-shi Kanagawa**
  **2120032 (JP)**
- **YANG ZHE**
  **Kawasaki-shi Kanagawa**
  **2120032 (JP)**
- **NAWATA Akifumi**
  **Kawasaki-shi Kanagawa**
  **2120032 (JP)**
- **OGAWA Daiki**
  **Kawasaki-shi Kanagawa**
  **2120032 (JP)**
- **AWAYA Nobuyoshi**
  **Kawasaki-shi Kanagawa**
  **2120032 (JP)**
- **TANAKA Satoru**
  **Kawasaki-shi Kanagawa**
  **2120032 (JP)**

(74) Representative: **Gille Hrabal**
**Partnerschaftsgesellschaft mbB**
**Patentanwälte**
**Brucknerstraße 20**
**40593 Düsseldorf (DE)**

(54) **OPTICAL ELEMENT, OPTICAL SYSTEM DEVICE, AND OPTICAL SYSTEM DEVICE MANUFACTURING METHOD**

(57)    An optical element that can be easily packaged with other structural components, an optical system device that utilizes such an optical element, and a method for manufacturing such an optical system device are provided. An optical element includes a concavo-convex shape 20 which accomplishes an optical function and which is provided at a boundary surface 11 between a first medium layer 1 with a first refractive index and a second medium layer 2 with a second refractive index that is higher than the first refractive index. An adjust portion 7 to maintain a certain distance from the concavo-convex shape 20 is formed at a first-medium-layer-1 side relative to the concavo-convex shape 20.

**EP 4 567 477 A1**

FIG. 1

( a )

( b )

( c )

( d )

**Description**

TECHNICAL FIELD

The present disclosure relates to an optical element, an optical system device and a method for manufacturing the optical system device.

BACKGROUND ART

Three-dimensional measurement sensors that utilize a Time Of Flight (TOF) scheme are now to be applied to portable devices, vehicles, and robots, etc. such a sensor measures a distance from an object based on a time until light emitted by a light source to an object is reflected and returns. When light from the light source is emitted uniformly to the predetermined region of the object, the distance at each point subjected to light emission can be measured, and thus the three-dimensional structure of the object can be detected.

The above-described sensor -based includes a light emitting unit that emits light, an optical element that controls the light from the light emitting unit into a predetermined light distribution, a camera unit that detects reflected light from each point of the object, and an arithmetic unit that calculates a distance from the object in accordance with a signal according to the light received by the camera unit. As for the light emitting unit, the camera unit and the arithmetic unit, already-existing VCSEL, CMOS imager and CPU, etc., are applicable, respectively, and thus the unique component of the above-described -based is the light emitting unit.

Conventional optical elements have a technical problem such that the variability occurs in light intensity due to the adverse effect of diffraction since the microlens array employs a regular-interval structure. Hence, in order to suppress such a variability, an attempt such as to place each lens at random is made (e.g., Patent Document 1).

Conversely, the TOF has needs for long-distance measurement, and emitted light needs an intensity that enables such a long-distance measurement. However, since the microlens array having undergone the random placement has the high uniformity of emitted light but decreases the intensity thereof, it is not suitable for such a long-distance measurement.

Hence, as for a scheme capable of processing intensive light signals while saving electric power, a scheme to utilize an optical element capable of emitting a dot pattern, and to execute a three-dimensional measurement from the Time Of Flight of such light is now examined (e.g., Patent Document 2).

CITATION LIST

PATENT LITERATURES

    Patent Document 1: JP 2006-500621A
    Patent Document 2: WO 2023/26987A

SUMMARY OF INVENTION

TECHNICAL PROBLEM

As for conventional optical elements, various examinations and considerations have been made for a portion that accomplishes an optical function, but packaging, etc., at the time of manufacturing of an optical system device that is combined with a light emitting unit and other structural components is not fully examined and considered yet.

Hence, the present disclosure relates to an optical element that can be easily packaged with other structural components, an optical system device that utilizes such an optical element, and a method for manufacturing such an optical system device.

SOLUTION TO PROBLEM

In order to accomplish the above objective, an optical element according to the present disclosure includes:

    a first medium layer with a first refractive index;
    a second medium layer with a second refractive index that is higher than the first refractive index; and
    a concavo-convex shape at a boundary surface therebetween, the concavo-convex shape accomplishing an optical function,

in which an adjust portion to maintain a certain distance from the concavo-convex shape is formed at a first-medium-layer side relative to the concavo-convex shape.

It is preferable that the first medium layer should be a gaseous body, and the second medium layer and the adjust portion should be integrally formed with each other by a second resin with the second refractive index.

It is preferable that the second medium layer should be formed of a second resin with the second refractive index, and the first medium layer and the adjust portion should be integrally formed with each other by a first resin with the first refractive index.

It is preferable that an opposite surface of the first medium layer or of the second medium layer to the boundary surface should be formed in a planar shape or in a curved shape.

It is preferable that the optical element should further include an antireflection film formed on an opposite surface of the first medium layer or of the second medium layer to the boundary surface.

It is preferable that an opposite surface of the first medium layer or of the second medium layer to the boundary surface should be provided with a fine concavo-convex structure that functions as a moth-eye.

The optical element may further include a third medium layer formed on an opposite surface of the second medium layer to the boundary surface.

The third medium layer may be formed of the same material as the first medium layer.

It is preferable that the first medium layer should be formed on a base material.

The optical element may further include greater than or equal to one functional layer which is formed on an opposite surface of the base material to a surface thereof where the first medium layer is present, and which has a particular function.

The functional layer may be an aperture mask.

The functional layer may be a metal wiring.

The functional layer may include:

a metal wiring formed on the base material;
an insulation layer formed on the metal wiring;
an aperture mask formed on the insulation layer; and
an electrical conduction portion that electrically connects the metal wiring and the aperture mask with each other.

The concavo-convex shape may be formed in a shape having a plurality of lenses arrayed at regular intervals.

It is preferable that, according to the above-described optical element capable of diffusing incident light to a predetermined diffusion range, the diffusion range should be defined as an interior of a simple closed curve, the concavo-convex shape should include a plurality of crests and valleys that have no regular interval, the concavo-convex shape should be formed so as not to have a portion where a gradient of the concavo-convex shape changes by 135 degrees within a width range that is $\lambda/(n_2-n_1)$ where $\lambda$ is a wavelength of the light, $n_1$ is the refractive index of the first medium layer, and $n_2$ is the refractive index of the second medium layer, and the concavo-convex shape should have a region that has a gradient causing incident light to be emitted to a region outside the diffusion range by Snell's law is smaller than or equal to 5 % of an entire region.

It is preferable that the concavo-convex shape should be formed in such a way that a distributed light distribution calculated by Snell's law becomes proportional to $\cos^{-n}\theta$ (where $1 \leq n \leq 7$) from a center of the diffusion range toward a boundary thereof.

An optical system device according to the present disclosure includes:

the above-described optical element; and
a light emitting unit which is placed at a first-medium-layer side of the optical element, and which includes a light source that emits light to the optical element,
in which the optical element and the light emitting unit are laminated with each other through the adjust portion.

The light emitting unit may include a light source covering layer which is formed of a resin and which covers the light source.

The optical system device may further include a cover that encloses therein the optical element and the light emitting unit. In this case, the cover may be at least partially formed of a material with a light blocking effect.

It is preferable that the concavo-convex shape should be formed in a shape in such a way that a plurality of lenses each allowing light with a wavelength $\lambda$ to pass therethrough is arrayed at regular intervals, the light emitting unit should include the light source that emits the light with the wavelength $\lambda$ to the plurality of lenses, and a distance $L_1$ between the light emitting unit and a first focal plane of the lens, and a distance $L_2$ between the light emitting unit and a second focal plane should satisfy the following equations, respectively, where m and n are each a natural number that is greater than or equal to 1, $f_1$ is a focal point distance by a cross-sectional shape of the lens perpendicular to a y direction, $f_2$ is a focal point distance by a cross-sectional shape of the lens perpendicular to an x direction, $P_1$ is a dimension of a pitch of the lenses in the x direction, and $P_2$ is a dimension of a pitch in the y direction.

[Formula 1]

$$\frac{m P_1^2}{2\lambda} - f_1 < L_1 < \frac{m P_1^2}{2\lambda} + f_1 \qquad \text{(equation 1)}$$

[Formula 2]

$$\frac{n P_2^2}{2\lambda} - f_2 < L_2 < \frac{n P_2^2}{2\lambda} + f_2 \qquad \text{(equation 2)}$$

A method for manufacturing an optical system device according to the present disclosure includes:

a laminating process of laminating, through the adjust portion with each other, the above-described optical element and a light emitting unit which is placed at a first-medium-layer side of the optical element and which includes a light source that emits light to the optical element; and
a cover forming process of forming a cover that encloses therein the optical element and the light emitting unit.

Moreover, another method for manufacturing an optical system device according to the present disclosure includes:

a first resin supplying process of supplying, on a substrate on which a light emitting unit is fastened, a photocurable first resin with a first refractive index;
a concavo-convex shape forming process of forming, on a surface of the first resin, a concavo-convex shape by imprinting; and
a second medium layer forming process of supplying and curing, on a surface of the concavo-convex shape, a photocurable second resin with a second refractive index that is higher than the first refractive index to form a second medium layer.

ADVANTAGEOUS EFFECTS OF INVENTION

Since the optical element according to the present disclosure is provided with the adjust portion to maintain a certain distance from the concavo-convex shape of the optical element, packaging thereof with the light emitting unit and other structural components is facilitated.

BRIEF DESCRIPTION OF DRAWINGS

FIG. 1 is a schematic cross-sectional view illustrating an optical element according to the present disclosure;
FIG. 2 is a schematic cross-sectional view illustrating another optical element according to the present disclosure;
FIG. 3 is a schematic cross-sectional view illustrating the other optical element according to the present disclosure;
FIG. 4 is a schematic plan view illustrating a functional layer of the optical element according to the present disclosure;
FIG. 5 is a schematic cross-sectional view illustrating a conventional optical system device in part (a) and an optical system device according to the present disclosure in part (b);
FIG. 6 is (a) a schematic cross-sectional view and (b) a plan view both illustrating an optical element including a plurality of functional layers according to the present disclosure;
FIG. 7 is a schematic perspective view illustrating an optical element according to the present disclosure;
FIG. 8 is an enlarged cross-sectional view illustrating an optical element according to the present disclosure;
FIG. 9 is a diagram for describing the refraction of the optical element according to the present disclosure;

FIG. 10 is a schematic plan view illustrating an optical system device according to the present disclosure;

FIG. 11 is a diagram illustrating a light intensity at a camera unit when a light intensity distribution $P(\theta)$ is made proportional to $\cos^{-n}\theta$ (where n is 1 to 7), i.e., made as $[P(\theta) \propto \cos^{-n}\theta]$;

FIG. 12 is a schematic cross-sectional view illustrating an optical system device that has an optical element of the present disclosure integrated with a light emitting unit;

FIG. 13 is a schematic cross-sectional view illustrating an optical system device according to the present disclosure;

FIG. 14 is a schematic cross-sectional view illustrating an optical system device provided with a cover according to the present disclosure;

FIG. 15 is a diagram for describing an example optical system device according to the present disclosure;

FIG. 16 is a schematic plan view illustrating a positional relation between a light emitting unit and an optical element according to the present disclosure;

FIG. 17 is a schematic cross-sectional view illustrating a method for manufacturing the optical system device according to the present disclosure;

FIG. 18 is a schematic cross-sectional view illustrating another method for manufacturing the optical system device according to the present disclosure; and

FIG. 19 is a schematic cross-sectional view illustrating the other method for manufacturing the optical system device according to the present disclosure.

## DESCRIPTION OF EMBODIMENTS

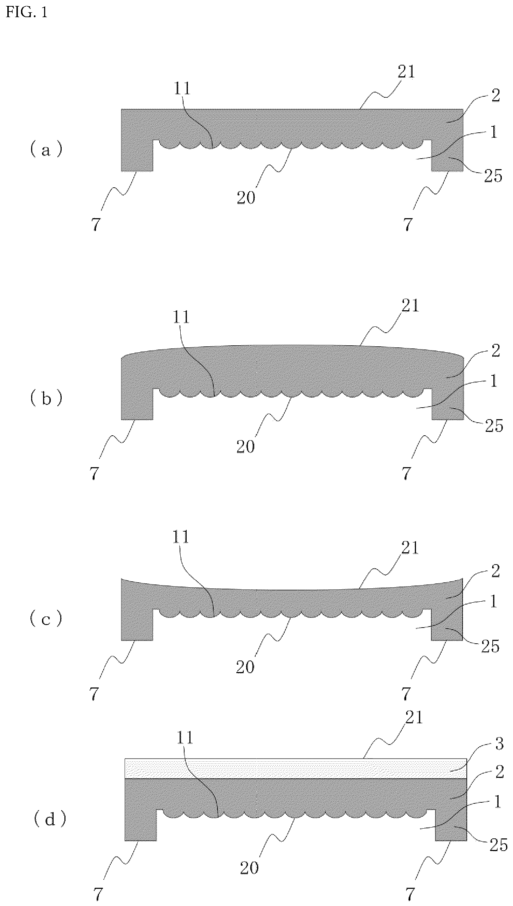

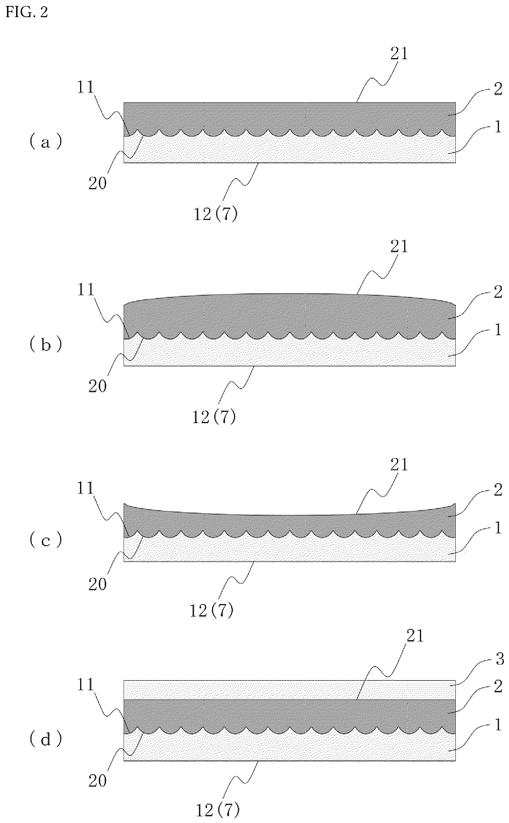

An optical element according to the present disclosure will be described below. As illustrated in FIG. 1 and FIG. 2, the optical element according to the present disclosure includes a concavo-convex shape 20 which accomplishes an optical function and which is placed at a boundary surface 11 between a first medium layer 1 with a first refractive index and a second medium layer 2 with a second refractive index that is higher than the first refractive index.

Moreover, the optical element according to the present disclosure is provided with an adjust portion 7 to maintain a certain distance from the concavo-convex shape 20 at the first-medium-layer-1 side relative to the concavo-convex shape 20 (the boundary surface 11). The term "certain distance" means a distance in the vertical direction and in the horizontal direction which should be maintained from the concavo-convex shape 20, a light emitting unit and other components at the time of assembling with the light emitting unit and the other components. In particular, it is preferable that the distance in the vertical direction should be maintained so as to exceed at least the heights of the convexities of the concavo-convex shape 20 at the first-medium-layer-1 side. By forming the adjust portion 7, at the time of assembling with the light emitting unit and the other components, since alignment, etc., in the vertical direction and in the horizontal direction can be easily and precisely made, packaging when an optical system device is manufactured is facilitated. It is preferable that the adjust portion 7 should be integrally formed with the first medium layer 1 or with the second medium layer 2.

The difference between the first refractive index and the second refractive index is not limited to any particular degree as far as at least the concavo-convex shape 20 can accomplish an optical function. In order to make the light emitting angle of a lens as a wide field of view, it is preferable to increase the refractive index difference between the first refractive index and the second refractive index, and for example, such a difference should be greater than or equal to 1.8, preferably, greater than or equal to 1.9, and more preferably, greater than or equal to 2.0.

In this case, in order to increase the refractive index difference, as illustrated in FIG. 1, it is preferable that the first medium layer 1 should be a gaseous body. The gaseous body is not limited to any particular gas, but for example, air or an inert gas, etc., is applicable. Moreover, such a gaseous body includes a gas in a depressurized state that is called a vacuum state. Furthermore, as for the second medium layer 2, a material through which at least light with a predetermined wavelength $\lambda$ can pass may be applied, and for example, resins (will be referred to as a second resin below), such as a silicon-based resin and an epoxy-based resin, and an acrylic resin, are applicable.

In this case, as illustrated in FIG. 1, the adjust portion 7 is formed as a lower portion of a lateral member 25 on the circumferential edge of the second medium layer 2 so as to maintain a certain distance from the concavo-convex shape 20, and to decide the thickness of the first medium layer 1 (the thickness of a space). The lateral member 25 may be formed of any materials. Moreover, the second medium layer and the adjust portion 7 may be integrally formed with each other from a singular material (e.g., the second resin) that has the second refractive index.

Such an optical element may be produced by any schemes, but for example, imprinting is applicable for production. More specifically, as for such a production, using a mold that has the inverted patterns of the concavo-convex shape 20 and of the adjust portion 7, the concavo-convex shape 20 may be formed on the material of the second medium layer. In this case, the concavo-convex shapes 20 and the adjust portions 7 may be formed across multiple regions, and then such multiple regions may be divided so as to produce a plurality of the optical elements.

Moreover, as for the optical element, it is desirable in some cases to cause outgoing light from the lens to be narrow-angle. In order to cause the light emitting angle of the lens to be a narrow angle, for example, the sag of the lens may be reduced. However, there is a limit in processing precision, and it is difficult to reduce the sag of the lens to be smaller than or equal to a certain size. In such a case, the refractive index difference between the first refractive index and the second refractive index may be reduced. This enables, when for example, the concavo-convex shape 20 is a lenticular shape, a reduction of the outgoing angle of the lens with the dimension of the sag being maintained as it is. Such a refractive index difference may be smaller than or equal to 0.4, preferably, smaller than or equal to 0.2. This enables the outgoing angle of the lens to be smaller than or equal to 30 degrees with the sag thereof being maintained in a size that is greater than or equal to 10 $\mu$m.

In this case, as for the first medium layer 1 and the second medium layer 2, materials that have the small refractive index difference from each other may be selected. The materials of the first medium layer 1 and of the second medium layer 2 are not limited to any particular materials as far as light with at least a predetermined wavelength $\lambda$ can pass, but for example, a silicon-based resin, an epoxy-based resin, and an acrylic resin, etc., are applicable.

In this case, as illustrated in FIG. 2, as for the adjust portion 7, an opposite surface 12 of the first medium layer 1 to the boundary surface 11 can be directly utilized as it is. That is, the thickness of the first medium layer 1 may be in a size that maintains a certain distance from the concavo-convex shape 20 at the first-medium-layer-1 side relative to the concavo-convex shape 20.

Such an optical element may be produced in any schemes, but for example, imprinting may be applied for production. More specifically, as for such a production, using a mold that has the inverted patterns of the concavo-convex shape 20 and of the adjust portion 7, after the concavo-convex shape 20 is formed on the material of the first medium layer, the material of the second medium layer may be applied, or after the concavo-convex shape 20 is formed on the material of the second medium layer, the material of the first medium layer may be applied. At this time, the concavo-convex shape 20 may be formed with a large area or in multiple regions, and then may be divided so as to produce a plurality of the optical elements.

Moreover, an opposite surface 21 of the second medium layer 2 to the boundary surface 11 may be formed in a planar shape as illustrated in part (a) of FIG. 1 or in part (a) of FIG. 2. Furthermore, the surface 21 can be formed in a curved shape as illustrated in parts (b) and (c) of FIG. 1 or in parts (b) and (c) of FIG. 2. In this specification, the term "planer shape" or "curved shape" means that there is no concavity and convexity which is larger than the wavelength of outgoing light, and such a shape is smooth enough. Adopting the planar shape or the curved shape facilitates addition of, to the surface 21, layers, films and shapes that have various functions. For example, an antireflection film may be formed on the surface 21. This suppresses a reflection when light outgoes from the second medium layer 2. Moreover, in order to suppress a reflection, a fine concavo-convex structure that functions as a moth-eye may be formed on the surface 21. Such a fine concavo-convex structure may be formed so as to be smaller than the wavelength of passing light.

Furthermore, in order to, for example, improve the high-temperature and high-humidity characteristics and a high-temperature-low-temperature thermal excursion characteristics of the first medium layer 1 and of the second medium layer 2, it is desirable in some cases to protect the surface 21 at the second-medium-layer-2 side. In this case, as illustrated in part (d) of FIG. 1 and part (d) of FIG. 2, the surface 21 may be provided with a third medium layer 3. When, for example, it is desirable to form a wide-angle lens, it is necessary to apply a resin with a high refractive index to the second medium layer 2. However, the resin with a high refractive index often has low environmental characteristics. Accordingly, when the third medium layer 3 that eases the stress to the second medium layer 2 is placed on the surface of the second medium layer 2, the environmental characteristics of the optical element can be improved.

The material of the third medium layer 3 is not limited to any particular materials as far as it can improve the environmental characteristics of the first medium layer 1 or of the second medium layer 2, but for example, a silicon-based resin, an epoxy-based resin, and an acrylic resin, etc., are applicable. Preferably, the third medium layer 3 is formed of the same material as that of the first medium layer 1.

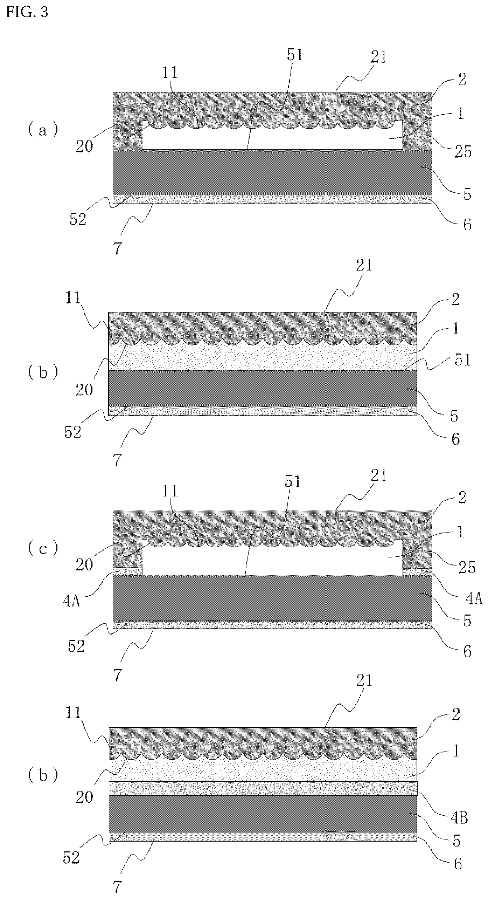

Moreover, as illustrated in FIG. 3, the first medium layer 1 may be formed on a base material 5. This enables formation of greater than or equal to one functional layer 6 that has a particular function on an opposite surface 52 of the base material 5 to a surface 51 where the first medium layer 1 is present. In this case, when the lower surface of the functional layer 6 is apart from the concavo-convex shape 20 by a certain distance, the lower surface of the functional layer 6 can serve as the adjust portion 7. An example base material 5 is a glass substrate. Note that, as illustrated in part (c) of FIG. 3, an intermediate resin layer 4A may be formed on the surface 51 of the base material 5. An example intermediate resin layer 4A is a resin layer as an underlying layer that improves the intimate contact between the base material 5 and the second medium layer 2. Moreover, the description that the first medium layer 1 is formed on the base material 5 means, as illustrated in parts (a) to (c) of FIG. 3, not only a case in which the first medium layer 1 is directly in contact with the surface 51 of the base material 5, but also a case in which greater than or equal to one intermediate layer 4B is present on the base material 5 as illustrated in part (d) of FIG. 3. An example intermediate resin layer 4B is a resin layer as an underlying layer that improves the intimate contact between the base material 5 and the first medium layer 1.

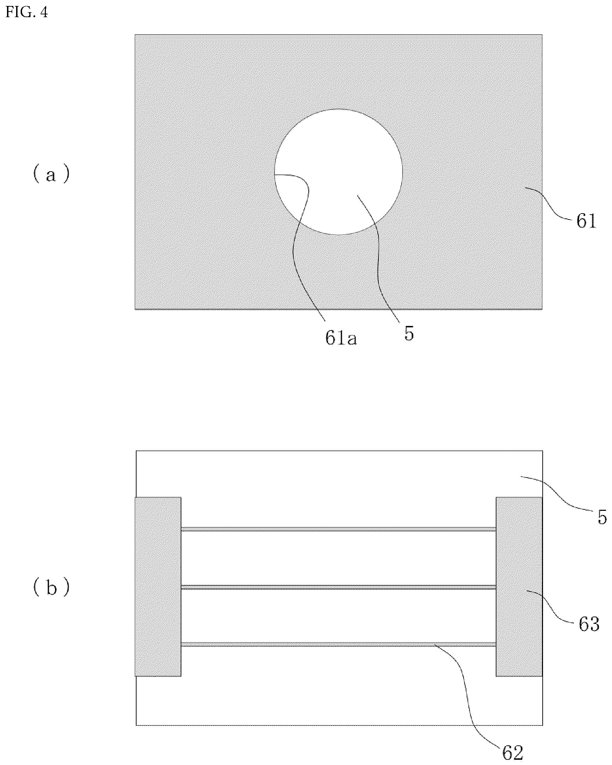

The functional layer 6 is not limited to any particular layers as far as it has a particular function, but an example is, as illustrated in part (a) of FIG. 4, an aperture mask 61. The aperture mask 61 is provided with an opening 61a, and blocks some of lights. This prevents electromagnetic waves that become noises from being emitted except through the opening 61a. An example aperture mask 61 is a metal like gold.

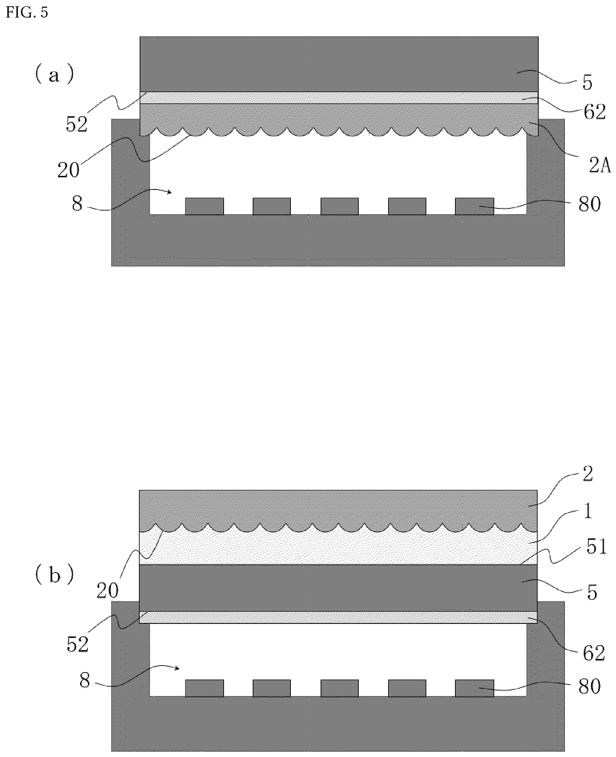

Moreover, another example functional layer 6 is a metal wiring 62 as illustrated in part (b) of FIG. 4. The metal wirings 62 form a predetermined electric circuit, etc. As illustrated in part (a) of FIG. 5, conventionally, the metal wirings 62 are formed on a lower surface 52 of the base material 5, and the concavo-convex shape 20 like lenses are formed on the resin layer 2A on the surface of such wirings. In this case, since the metal wirings 62 are electrically insulated by the resin layer 2A, in order to accomplish an electrical conduction to the package side, it is necessary to further form a structure for such an electrical conduction. Conversely, as illustrated in part (b) of FIG. 5, according to the optical element of the present disclosure, since the concavo-convex shape 20 like lenses is formed on one-surface-51 side of the base material 5, and the metal wirings 62 are formed on the other-surface-52 side, the respective metal terminals of the metal wirings 62 can be exposed to the exterior. Hence, a structure for an electrical conduction to the package side like the light emitting unit 8 is unnecessary, and direct connection to the contacts at the package side can be accomplished. An example metal wiring 62 is ITO.

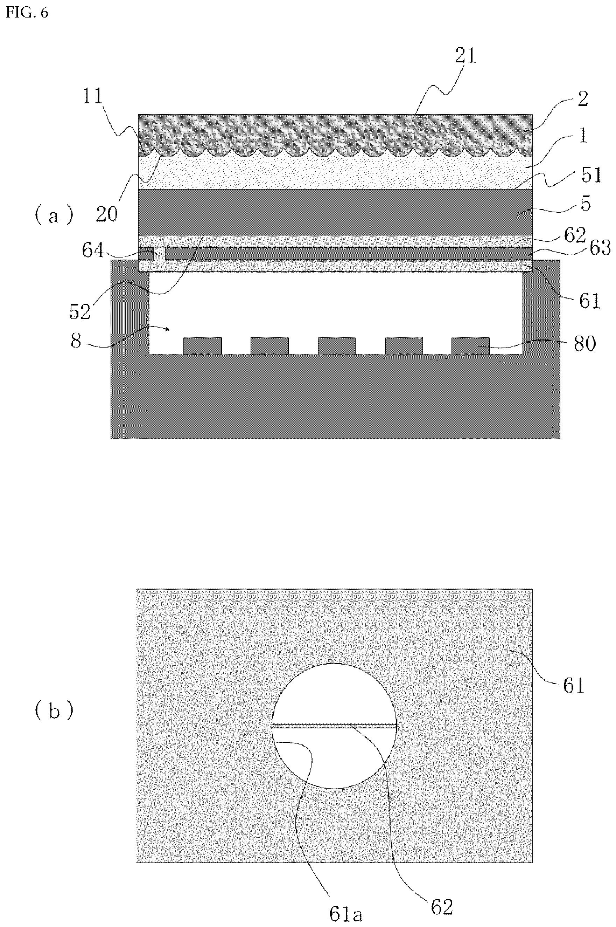

Furthermore, the functional layer 6 may be a combination of layers each having a particular function. For example, as illustrated in part (a) of FIG. 6, the functional layer is formed so as to include the metal wiring 62 like ITO formed on the surface 52 of the base material 5, an insulation layer 63 formed on the metal wiring 62, the aperture mask 61 formed of a metal formed on the insulation layer 63, and an electrical conduction portion 64 that electrically connects the metal wiring 62 to the aperture mask 61. This gives functions, such as eye-safe and EMI compatible functions, to the optical element. Moreover, by forming the aperture mask 61 by metal, a connection between the contact at the package side and the metal wiring 62 can be easily accomplished.

The concavo-convex shape 20 of the optical element is not limited to any particular ones as far as it has an optical function. For example, a shape which controls incident light and which allows the controlled light to go out, such as a microlens array (MLA) or a diffractive optical element (DOE), is an example. The lenses of the microlens array may be arranged at regular intervals, or may be arranged at random.

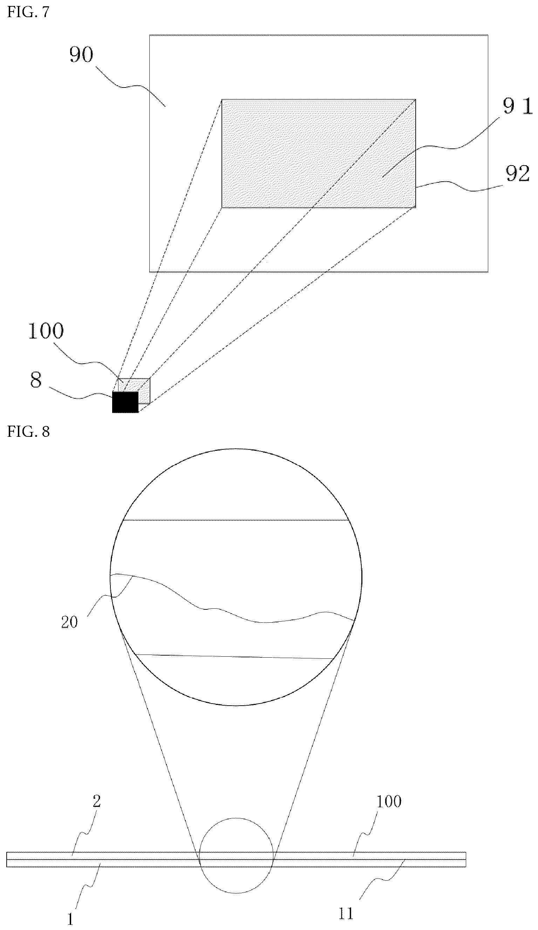

As for an example concavo-convex shape 20, the optical element 100 capable of diffusing incident light to a predetermined diffusion range 91 as illustrated in FIG. 7 will be described. The diffusion range 91 of the optical element 100 is defined as the interior of a simple closed curve within a predetermined plane. Moreover, as illustrated in FIG. 8, the concavo-convex shape 20 includes a plurality of crests and of valleys that have no regular interval.

In this example, the diffusion range 91 is defined as the interior of a simple closed curve 92, such as a polygon or an ellipse, within a predetermined plane 90. Moreover, the predetermined plane 90 in this example means a plane (an xy plane) which is perpendicular to the optical axis (a z-axis) of a light source which emits light to the optical element, and which is apart from the optical element by at least greater than or equal to 100 times of the light size when emitted from a light source 2.

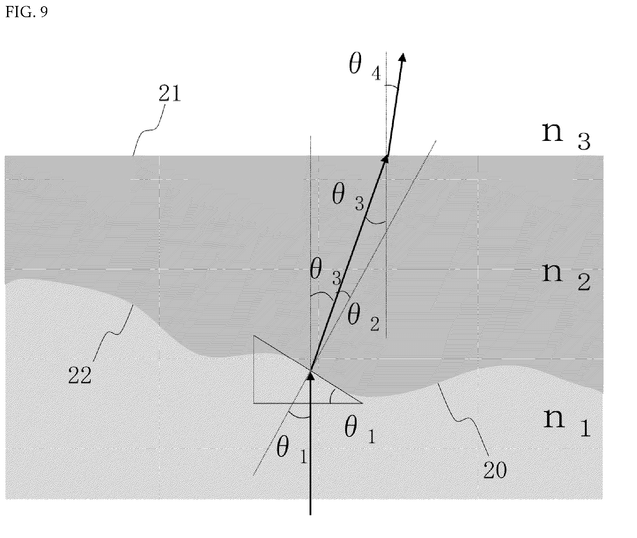

The concavo-convex shape 20 is formed so as to cause incident light to be refracted within the diffusion range 91 by Snell's law. This will be described with reference to FIG. 9. In order to simplify the understanding to the description, the optical element will be described which has an emitting surface 21 that is a plane (an xy plane), and which includes, on an incidence surface 18, the concavo-convex shape 20 that is defined by $z = f(x,y)$. Moreover, it is assumed that, in this example, light in the perpendicular direction (a z-axis direction) to the xy plane enters the incidence surface.

First of all, an incidence angle $\theta_1$ of light to an incidence surface 22 of the optical element and a refraction angle $\theta_2$ of refracting light within the optical element satisfy a relation that is $n_1\sin\theta_1 = n_2\sin\theta_2$ from Snell's law. Likewise, Snell's law is satisfied in a relation between an incidence angle $\theta_3$ to the emitting surface 21 of the optical element and a refraction angle $\theta_4$ of emitted light to the exterior. Hence, $n_1\sin\theta_1 = n_2\sin\theta_2$, $n_2\sin\theta_3 = n_3\sin\theta_4$ are satisfied when $n_1$, $n_2$, and $n_3$ are respectively defined as the refractive index of the first medium layer 1 of the optical element, the refractive index of the second medium layer 2 thereof, and the refractive index of air. Moreover, as illustrated in FIG. 9, $\theta_3 = \theta_1 - \theta_2$. That is, since a light emitting angle $\theta_4$ can be calculated from Snell's law between the incidence surface 22 of the optical element and an emitting surface 21 thereof, it can be expressed as $\theta_4 = g(\theta_1)$. When, for example, the incidence angle $\theta_1$ is small enough, and it can be approximated as $n_1\theta_1 = n_2\theta_2$ and $n_2\theta_3 = n_3\theta_4$, it can be expressed as $\theta_4 = \theta_1(n_2-n_1)/n_3$.

As described above, the distributed light distribution of the emitted light, i.e., the intensity distribution of the light emitting angle $\theta_4$ becomes a one-for-one relation to the frequency distribution of the incidence angle $\theta_1$. Moreover, as illustrated in FIG. 9, since the incidence angle $\theta_1$ is the same angle as an inclination angle (a gradient) $\theta_1$ of the rough surface (the surface of the concavo-convex shape 20) of the optical element, the frequency distribution of the incidence angle $\theta_1$ corresponds to the frequency distribution of the inclination angle $\theta_1$ of the rough surface of the optical element.

Moreover, partial differentials of z relative to x and y, $\partial z/\partial x|_{y=yo}$ and $\partial z/\partial y|_{x=xo}$, represent respective inclinations when it is cut by respective surfaces that are $y = y_o$, $x = x_o$. Hence, when the incidence angle at the $y = y_o$ surface when light perpendicularly enters in the incidence surface of the optical element is $\theta_{ix}$, and the incidence angle at the $x = x_o$ surface is $\theta_{iy}$, since $\tan\theta_{ix} = \partial z/\partial x|_{y=yo}$, $\tan\theta_{iy} = \partial z/\partial y|_{x=xo}$, it can be expressed as $\theta_{ix} = \arctan(\partial z/\partial x|_{y=yo})$, $\theta_{iy} = \arctan(\partial z/\partial y|_{x=xo})$.

Conversely, when the light emitting angle at the $y = y_o$ surface of light emitted from the optical element is $\theta_{ox}$, and the light emitting angle at the $x = x_o$ surface is $\theta_{oy}$, as described above, since Snell's law is satisfied between the incidence angle $\theta_{ix}$ and the light emitting angle $\theta_{ox}$, and, the incidence angle $\theta_{iy}$ and the light emitting angle $\theta_{oy}$, it can be expressed as $\theta_{ox} = g(\theta_{ix})$, $\theta_{oy} = g(\theta_{iy})$.

Moreover, a distributed light intensity distribution $h(\theta_o)$ of emitted light becomes, when a frequency function FREQUENCY $(\theta)$ of $\theta_o$ is applied, $h(\theta_o) = $ FREQUENCY$(\theta_o)$. Accordingly, when these relations are combined, a distributed light intensity distribution $h(\theta_{ox})$ in the x direction becomes $h(\theta_{ox}) = $ FREQUENCY $(\theta_{ox}) = $ FREQUENCY$(g(\theta_{ix})) = $ FREQUENCY$(g(\arctan(\partial z/\partial x|_{y=yo})))$.

Likewise, a distributed light intensity distribution $h(\theta_{oy})$ in the y direction becomes $h(\theta_{oy}) = $ FREQUENCY$(\theta_{oy}) = $ FREQUENCY$(g(\theta_{iy})) = $ FREQUENCY $(g(\arctan(\partial z/\partial y|_{x=xo})))$.

In view of the foregoing, in order to accomplish a predetermined distributed light intensity distribution, it is appropriate to calculate the frequency distribution of the inclination angle (a gradient) $\theta_1$ at the optical element surface to design the concavo-convex shape 20. In this case, it is preferable that, when calculated by Snell's law, the concavo-convex shape 20 should be designed in such a way that a region that has a gradient causing incident light to be emitted to a region outside the diffusion range 91 is smaller than or equal to 5 % of the entire region, preferably, smaller than or equal to 3 %, more preferably, smaller than or equal to 1 %.

In order to cause the optical element to function as a diffuser, it is preferable that the concavo-convex shape 20 should have a height that is at least greater than or equal to 2.5 times of $\lambda/(n_2-n_1)$, preferably, greater than or equal to 5 times, and more preferably, greater than or equal to 10 times where $\lambda$ is the wavelength of incident light to the optical element in a vacuum state, $n_1$ is the refractive index of the first medium layer 1, and $n_2$ is the refractive index of the second medium layer 2. Note that the term "height of concavo-convex shape 20" means the difference between the highest crest of the concavo-convex shape 20 and the lowest valley thereof.

Moreover, when the surface of the concavo-convex shape 20 has a portion where the inclination angle $\theta_1$ (the gradient) keenly changes, this is not preferable because of adverse effects of scattering and of diffraction, etc. Hence, it is preferable that the inclination angle $\theta_1$ of the concavo-convex shape 20 should change gradually. More specifically, the concavo-convex shape 20 is formed in such a way that the surface thereof does not have a portion where the inclination angle $\theta_1$ (the gradient) changes by 135 degrees, preferably, by 120 degrees, and more preferably, by 90 degrees. Note that the change in inclination angle $\theta_1$ is ignorable as far as such a change is small and thus it cannot be sensed in light. Hence, it is appropriate if the inclination angle $\theta_1$ at the surface of the concavo-convex shape 20 is calculated from a change in height within a width range that is $\lambda/(n_2-n_1)$ from an arbitrary position to another arbitrary position where $\lambda$ is the wavelength of incident light to the optical element in a vacuum state, $n_1$ is the refractive index of the first medium layer 1, and $n_2$ is the refractive index of the second medium layer 2. In this example, the term "width" means the width of the concavo-convex shape 20 in a vertical direction to the z-axis direction (a parallel direction to the incidence surface or the emitting surface).

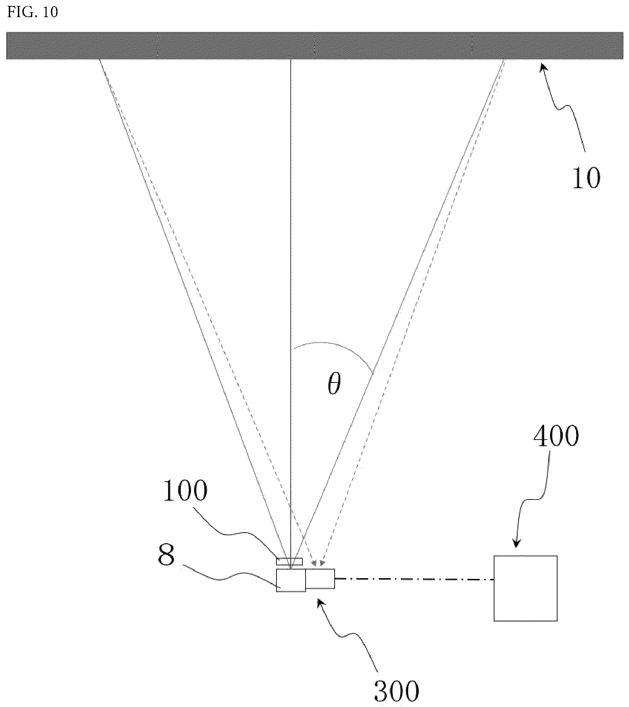

Furthermore, as illustrated in FIG. 10, a general sensor system mainly includes an optical element 100, a light emitting unit 8, a camera unit 300 that detects reflected light from each point on an object 10, and an arithmetic unit 400 that calculates a distance to the object in accordance with a signal based on the light received by the camera unit 300. In this case, as for the reflection angle, the wider light is reflected and enters the camera unit 300, the lower the light intensity becomes. Hence, in order to allow the camera to well sense incident light at a wide angle, the larger an angle $\theta$ of the light distribution of light passing through the optical element 100 is, the higher the light intensity becomes, which is preferable. That is, as for the light distribution of light at a far field (a far-field) from the optical element 100, a distribution is preferable such that the larger the angle $\theta$ is, the higher the intensity becomes. Hence, it is preferable that at least the concavo-convex shape 20 should be formed in such a way that the distributed light distribution calculated by Snell's law monotonically increases from the center of a diffusion range 91 toward the boundary. In order to accomplish this effect, it is appropriate if the concavo-convex shape 20 of the optical element is designed in such a way that the frequency distribution of the inclination monotonically increases as the inclination increases.

Note that, in this specification, the term "center of diffusion range 91" means a position of an intersection between the optical axis of the light source 2 and the diffusion range 91 when light from the light source 2 is perpendicularly emitted to the optical element of the present disclosure. Moreover, the term "boundary of diffusion range 91" means a part corresponding to the above-described closed curve 92 and a position of the maximum peak in the distributed light intensity distribution in the cross section.

Moreover, in an optical system in which outgoing light from the optical element 100 is reflected by a screen and returns to the camera, assuming that the reflection at the screen being Lambertian reflectance, in order to cause the intensity of returning light to the camera to be uniform relative to the angle $\theta$, it is necessary to make a light intensity distribution $P(\theta)$ at a far field (far-field) from the optical element 100 proportional to $\cos^{-7}\theta$, i.e., $[p(\theta) \propto \cos^{-7}\theta]$. Hence, it is the most preferable to cause the distributed light distribution of light emitted from the light source 2 and passing through the optical element 100 to be proportional to $\cos^{-7}\theta$.

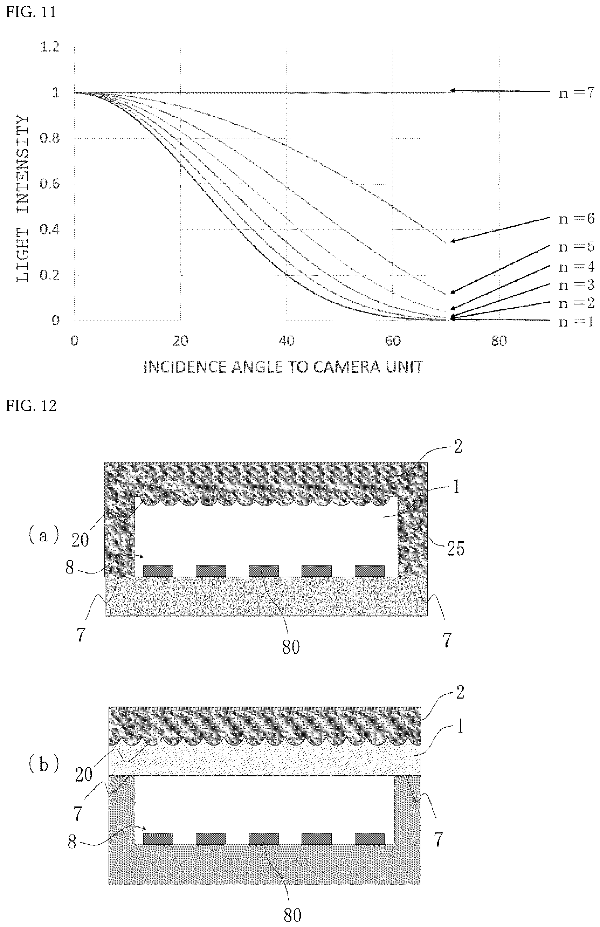

FIG. 11 is a graph in which the intensity of returning light to the camera unit is calculated relative to the incidence angle $\theta$ when the light intensity distribution $P(\theta)$ at a far field (far-field) from the optical element 100 is made proportional to $\cos^{-n}\theta$ (where n is 1 to 7), i.e., $[P(\theta) \propto \cos^{-n}\theta]$ in an optical system in which light passing through the optical element 100 is reflected by a screen and returns to the camera. It becomes clear that, the larger the incidence angle is, the smaller the light intensity becomes, but the larger n is, the smaller such a difference becomes. It also becomes clear that, when the light intensity distribution $P(\theta)$ is made proportional to $\cos^{-7}\theta$, i.e., $[P(\theta) \propto \cos^{-7}\theta]$, the intensity of returning light to the camera becomes uniform to the angle $\theta$.

When, however, light is emitted so as to spread at a wide angle, it is difficult to make such a distribution completely proportional to $\cos^{-7}\theta$, and thus a light intensity distribution that is proportional to $\cos^{-n}\theta$ (where $1 \leq n \leq 7$) in sensitivity of the camera is acceptable.

Accordingly, it is preferable that the concavo-convex shape 20 of the optical element should be formed in such a way that a distributed light distribution calculated by Snell's law becomes proportional to $\cos^{-n}\theta$ (where $1 \leq n \leq 7$) from the center of the diffusion range 91 toward the boundary thereof, and preferably, should be formed so as to be proportional to $\cos^{-7}\theta$. In order to accomplish such an effect, it is preferable that the frequency distribution of the inclination angle $\theta_1$ of the concavo-convex shape 20 of the optical element should be proportional to $\cos^{-n}\theta_1$ (where $1 \leq n \leq 7$), and preferably, proportional to $\cos^{-7}\theta_1$.

Note that the larger the concavo-convex shape 20 is, the more the adverse effect of light as wave is reduced, which is preferable. More specifically, it is preferable that each concavo-convex shape 20 should have a height that is at least greater than or equal to 5 times of $\lambda/(n_2-n_1)$, preferably, greater than or equal to 10 times, and more preferably, greater than or equal to 25 times.

Next, an optical system device according to the present disclosure will be described. As illustrated in part (b) of FIG. 5, part (a) of FIG. 6, FIG. 12 and FIG. 13, the optical system device according to the present disclosure includes, for example, the above-described optical element according to the present disclosure, and the light emitting unit 8 which is placed at the first-medium-layer-1 side of the optical element, and which emits light to the optical element. Moreover, the optical element and the light emitting unit 8 are laminated with each other through the adjust portion 7.

In this example, the light emitting unit 8 is not limited to any particular units as far as it includes light sources 80 each emitting light with a wavelength $\lambda$. Moreover, the light emitting unit 8 may be a singular light source or a plurality of light sources. Furthermore, a plurality of light sources may be accomplished by causing light from a singular light source to pass through an aperture with a plurality of slits. When the light emitting unit 8 is formed by a plurality of light sources, it is preferable that such light sources 80 should be formed on the same plane since a distance between the optical element and the light emitting unit 8 and an angle can be precisely adjusted. An example light emitting unit 8 is a Vertical Cavity Surface Emitting LASER (VCSEL) that is expected to have high output with little electrical power. As for the VCSEL, there are a single emitter VCSEL that has a singular light source 80 capable of emitting light in the perpendicular direction to the light emitting surface, and a multi-emitter VCSEL that includes a plurality of light sources 80. Moreover, it is preferable that a light absorption film should be formed on a portion other than the light source 80 since noises originating from reflected lights are prevented from enter.

Moreover, as illustrated in FIG. 12, it is preferable that the light emitting unit 8 should be in contact with the adjust portion 7 of the optical element according to the present disclosure and be integrally formed therewith. This provides a reliable optical system device that has adjusted distance between the optical element and the light emitting unit 8, and angle, etc. In particular, in order to accomplish the optical function of the concavo-convex shape 20 of the optical element, it may be necessary in some cases to adjust the position of the optical element relative to the light emitting unit 8. In this case, according to the optical system device, the light emitting unit 8 and the optical element can be integrally formed with each other so as to maintain an appropriate distance therebetween using the adjust portion 7.

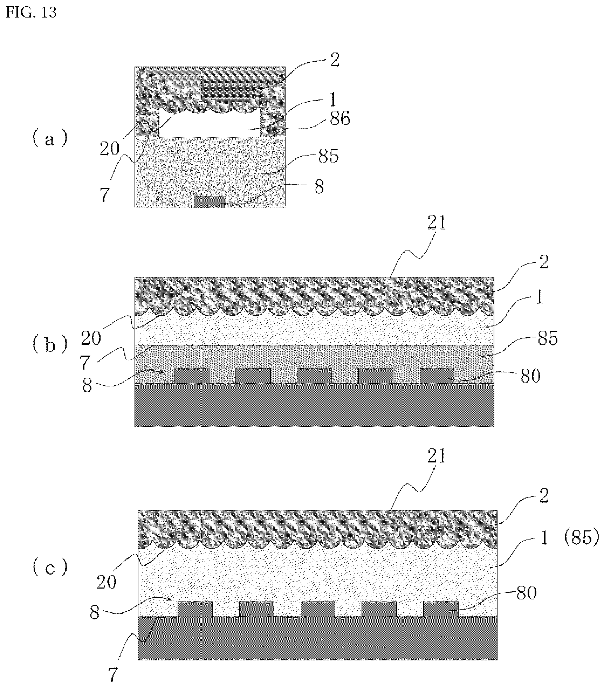

Note that the light emitting unit 8 often generates heat when emitting light. Like conventional technologies, when a gaseous body that has a low thermal conductivity is present between the optical element and the light emitting unit 8, the performances of the light emitting unit 8 and of the optical element may decrease, or a breakage may occur. Hence, as illustrated in FIG. 13, the light emitting unit 8 may include a light source covering layer 85 which is formed of a resin and which covers the light source 80. Since the resin has a higher thermal conductivity than that of a gaseous body, the heat dissipation of the light source can be enhanced. Moreover, since the resin can reduce the refractive index difference with the material of the light source 80 more than a gaseous body, the light extraction efficiency of the light source 80 can be improved. Furthermore, since the light source 80 is covered by the light source covering layer 85, the possibility such that the light source 80 is directly exposed as it is can be reduced even if a breakage of the optical system device occurs. This is preferable from the standpoint of "eye-safe". Still further, a fine concavo-convex structure that serves as an antireflection film or a moth-eye can be formed on the surface of the light source covering layer 85. This can suppress a reflection when light is emitted from the light source covering layer 85. The resin of the light source covering layer 85 is not limited to any particular resin as far as it can allow light with at least a wavelength $\lambda$ to pass through, and can allow the concavo-convex shape 20 to accomplish an optical function. For example, a silicon-based resin, an epoxy-based resin, and an acrylic resin, etc., are applicable. Moreover, a resin, etc., as an underlying layer that improves the intimate contact between the light emitting unit 8 and the material of the first medium layer 1 or of the second medium layer 2 may be also applied. Furthermore, a base material like glass or a metal layer may be provided on the surface of the light source covering layer 85.

It is preferable that the light source covering layer 85 should be formed so as to have a thickness that maintains a certain distance from the light source 80 to a surface 86 of the light source covering layer 85. This facilitates precise alignment, etc., in the vertical direction and in the horizontal direction when assembled with the optical element and other components, and thus packaging when the optical system device is produced is facilitated. For example, as illustrated in parts (a) and (b) of FIG. 13, when the adjust portion 7 of the optical element and the surface 86 of the light source covering layer 85 are in contact with each other and are formed so as to be integrated with each other, a reliable optical system device can be provided which has adjusted distance between the optical element and the light emitting unit 8, and angle, etc.

Furthermore, the first medium layer 1 may be made in common with the light source covering layer 85. In this case, as illustrated in part (c) of FIG. 13, a space with the concavo-convex shape 20 is filled with the material of the first medium layer 1 only so as to integrally form such layers with the optical element. In this case, the boundary between the first medium layer 1 and the light emitting unit 7 serves as the adjust portion 7.

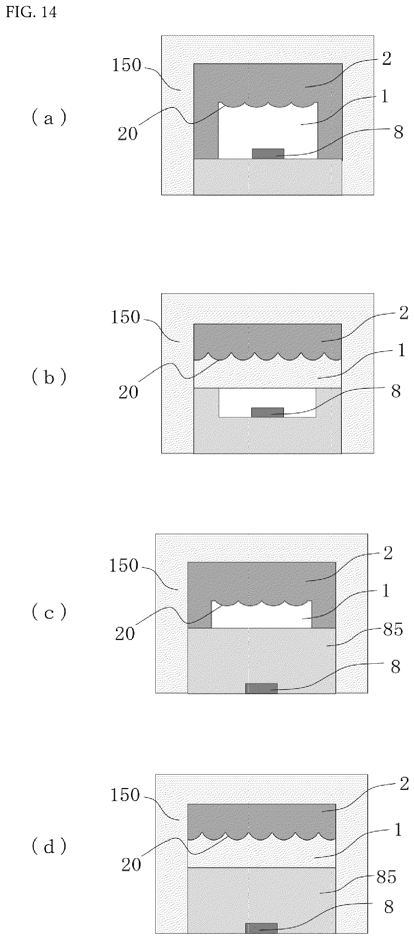

Still further, as illustrated in FIG. 14, the optical system device according to the present disclosure may include a cover 150 that encapsulates therein the optical element and the light emitting unit 8. Since the light source 80 is encapsulated by the cover 150, the possibility such that the light source 80 is directly exposed is little even if a breakage, etc., of the optical system device occurs. This is preferable from the standpoint of "eye-safe". A resin that forms the cover 150 is not limited to any particular resins as far as it allows light with at least a wavelength $\lambda$ to pass through, and allows the concavo-convex shape 20 to accomplish an optical function, but for example, a silicon-based resin, an epoxy-based resin, and an acrylic resin, etc., are applicable. Note that when the first medium layer 1 is a gaseous body, the above-described lateral member 25 is formed at the circumferential edge of the second medium layer 2 so as to gas-tightly seal a space between the light emitting unit 8 and the second medium layer where the first medium layer 1 is present.

Yet still further, when a resin with a high refractive index is applied for the second medium layer, etc., titanium oxide ($TiO_2$) may be applied to such a resin. However, since titanium oxide functions as a photocatalyst, there is a technical problem such that the resin is decomposed when being exposed to light like ultraviolet. Hence, in such a case, a material with a light blocking effect that suppresses a transmission of light like ultraviolet may be applied to the material that forms at least a part of the cover 150, and to the material that covers the cover 150.

Note that the cover 150 may be formed of the same material as a whole, or may be formed of different materials part by part, such as an upper surface or a side face. For example, the side face may be formed of a material with a light blocking effect, and the upper surface may be formed of a material that allows only infrared to pass through.

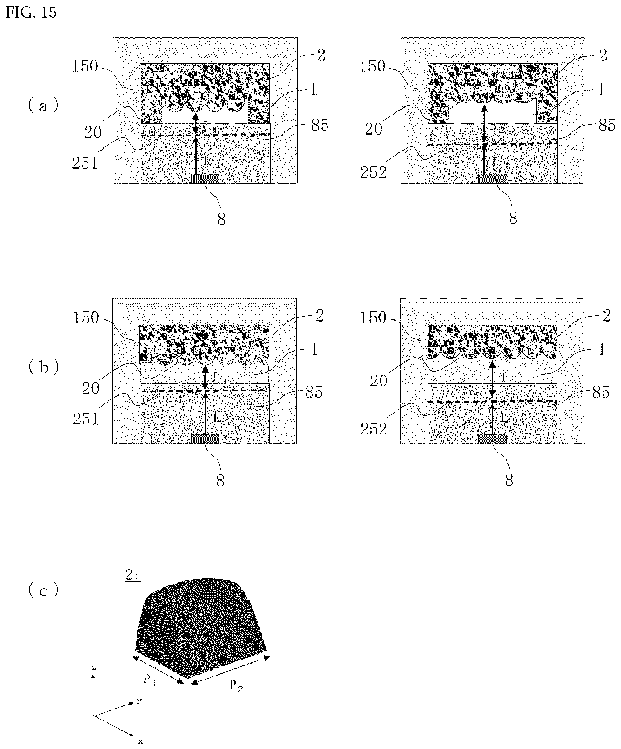

Next, an optical system device that emits a dot pattern will be described as an example optical system device according to the present disclosure. As illustrated in FIG. 15, the optical element applied for the optical system device has the concavo-convex shape 20 that has the lenses 21 through which light with a wavelength $\lambda$ passes and which are arranged at regular intervals on the boundary surface 11 between the first medium layer 1 that has a first refractive index and the second medium layer 2 that has a second refractive index. Moreover, part (a) of FIG. 15 illustrates an example optical system device in which the first medium layer 1 is a gaseous body and the second medium layer is a resin, and part (b) of FIG. 15 illustrates an example optical system device in which both of the first medium layer 1 and the second medium layer are resins.

Moreover, each lens 21 has a focal point at a position which is at the first-medium-layer-1 side and which is apart from the lens 21 by a predetermined distance f (where f > 0). According to the optical element of the present disclosure, the greater the focal point distance f becomes, such as greater than or equal to 10 $\mu$m, greater than or equal to 20 $\mu$m, greater than or equal to 40 $\mu$m, and greater than or equal to 60 $\mu$m, the more the contrast can be improved. Note that, in the following description, the position of a plane including the focal point of the lens 21 and perpendicular to the optical axis of the lens will be referred to as a focal point position 25.

The shape of the lens 21 can be designed freely in accordance with a spreading pattern of dots to be emitted (will be referred to as a dot pattern below). When, for example, a circular dot pattern is desired, the lens 21 may be formed as a spherical lens. Moreover, when a non-circular dot pattern is desired, the lens 21 may be formed as an aspheric lens that is designed as appropriate. In the case of an aspheric lens, the focal point distance varies depending on the direction. Part (c) of FIG. 15 illustrates an example aspheric lens in which a focal point distance by a cross-sectional shape perpendicular to the y direction is $f_1$, a focal point distance by a cross-sectional shape perpendicular to the x direction is $f_2$ ($f_1 \# f_2$), the dimension of the pitch in the y direction is $P_1$, and the dimension of the pitch in the x direction is $P_2$. Moreover, regarding the lens shape, a convex lens or a concave lens, etc., is applicable. In the case of the convex lens, it is preferable that a convex lens portion should be directed toward the light emitting unit 8.

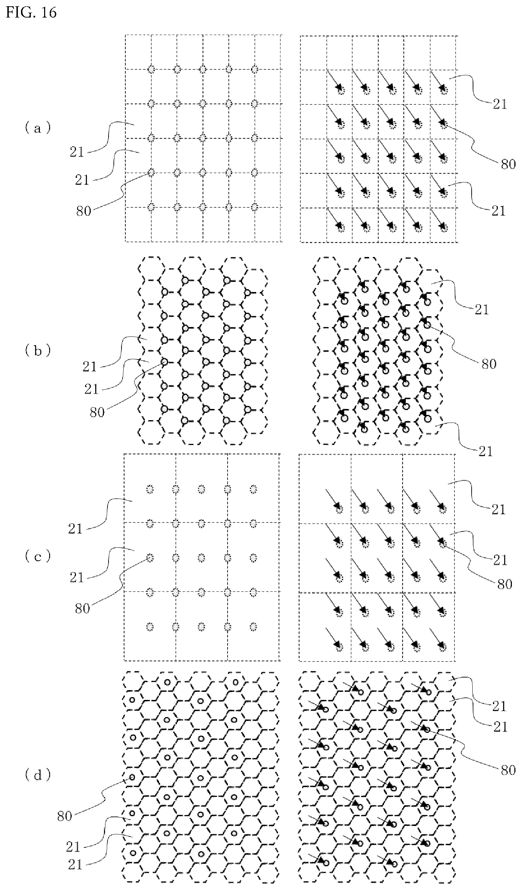

As illustrated in FIG. 16, regarding the regular-interval arrangement of the lenses 21, rectangular lenses 21 may be arranged in a square matrix in a planar view, or hexagonal lenses 21 may be arranged in a hexagonal matrix in a planar view. Furthermore, the lens 21 is not limited to any particular kinds as far as it can function as a lens, and for example, a Fresnel lens, a DOE lens, a meta-lens, etc., are applicable. Still further, the lens 21 may be provided with an antireflection film that prevents light from the light emitting unit 8 from being reflected.

The light emitting unit 8 includes the light source 80 that emits light with a wavelength $\lambda$ to the plurality of lenses 21. The light emitting unit 8 may be a singular light source or a plurality of light sources. When the singular light emitting unit 8 includes the plurality of light sources 80, it is preferable that the light sources 80 should be formed on the same plane. Moreover, when the singular light emitting unit 8 includes the plurality of light sources 80, it is necessary to place the light sources 80 in such a way that the number thereof to each lens 21 of the optical element becomes consistent in a planar view even if each light source 80 and the optical element are translated relative to each other. In order to accomplish such a placement, it is appropriate that, when the positions of the respective light sources 80 relative to the lenses 21 are laid over on the single lens and gathered, the positions of the apparent and gathered light sources 80 are arranged so as to be consistent with each other. For example, the light sources included in the same light emitting unit may be arrayed at regular intervals, a pitch $P_x$ of the light sources in the x direction may be a multiple of a pitch $P_1$ of the lenses by a natural number or by an inverse number of the natural number, and a pitch $P_y$ in the y direction may be a multiple of a pitch $P_2$ of the lenses by a natural number or by an inverse number of the natural number. In other words, when it is defined that the dimension of the pitch in the x direction is Px, the dimension of the pitch in the y direction is Py, and j and k are each a natural number that is greater than or equal to 1, it is appropriate that the light sources 80 included in the same light emitting unit 8 are arrayed regularly so as to satisfy $P_x = jP_1$ or $jP_x = P_1$, and $P_y = kP_2$ or $kP_y = P_2$. Parts (a) and (b) of FIG. 16 illustrate a case in which the pitches $P_x$ and $P_y$ of the light sources 80 are made equal to the pitches $P_1$ and $P_2$ of the lenses 21 of the optical element 2, respectively. Moreover, part (c) of FIG. 16 illustrates a case in which the pitches $P_x$ and $P_y$ of the light sources 80 are made so as to be 1/2 times of the pitches $P_1$ and $P_2$ of the lenses 21 of the optical element 2, respectively. Furthermore, part (d) of FIG. 16 illustrates a case in which the pitches $P_x$ and $P_y$ of the light sources 80 are made twice as much as the pitches $P_1$ and $P_2$ of the lenses 21 of the optical element 2, respectively.

The light emitting unit 8 and the optical element 2 are placed in such a way that the optical-axis direction of the light source 80 of the light emitting unit 8 and the optical-axis direction of the lens 21 of the optical element 2 are consistent with each other.

[Positional Relation between Light Emitting Unit and Optical Element]

As illustrated in FIG. 15, a distance $L_1$ between the light emitting unit 8 and a first focal plane 251 of the lens 21, and a distance $L_2$ between a second focal plane 252 and such a unit can convert, when the following formulae α and β are satisfied, incident light into a dot pattern with a large contrast. In this case, m and n are each a natural number that is greater than or equal to 1, $P_1$ is a dimension of the pitch of the lenses 21 in the x direction, $P_2$ is a dimension of the pitch in the y direction, λ is the wavelength of incident light from the light emitting unit 8, $f_1$ is a focal point distance by the cross-sectional shape of the lens 21 perpendicular to the y direction, $f_2$ is a focal point distance by the cross-sectional shape of the lens 21 perpendicular to the x direction, and a, b, c and d are each a coefficient representing an allowable error. Note that the first focal plane 251 means a plane which is perpendicular to the optical axis (the z direction) of the lens 21 and which is located at the focal point position by the cross-sectional shape of the lens 21 perpendicular to the y direction. Moreover, the second focal plane 252 means a plane which is perpendicular to the optical axis (the z direction) of the lens 21 and which is located at the focal point position by the cross-sectional shape of the lens 21 perpendicular to the x direction. Furthermore, when the focal points are located at both sides of the lens 21, it is preferable that the first focal plane 251 and the second focal plane 252 which are located at the light-emitting-unit-8 side of the lens 21 should be taken as references. Still further, the distances $L_1$ and $L_2$ each mean a distance (an optical path length) when light travels in vacuum while traveling in a medium within the same time, and is expressed as, when the refractive index of the medium is defined as N and an actual distance is defined as L, a product that is NL.

[Formula 1]

$$\frac{mP_1^2}{2\lambda} - af_1 < L_1 < \frac{mP_1^2}{2\lambda} + bf_1 \qquad \text{(equation } \alpha\text{)}$$

[Formula 2]

$$\frac{nP_2^2}{2\lambda} - cf_2 < L_2 < \frac{nP_2^2}{2\lambda} + df_2 \qquad \text{(equation } \beta\text{)}$$

In this case, the smaller values of the coefficients a, b, c and d in the equations α and β, such as 1, 0.5, 0.3 and 0.1 are preferable. When the coefficients in the equations α and β satisfy a = b = c = d = 1, the equations α and β become the following equation 1 and 2, respectively.

[Formula 3]

$$\frac{m P_1^2}{2\lambda} - f_1 < L_1 < \frac{m P_1^2}{2\lambda} + f_1 \qquad \text{(equation 1)}$$

[Formula 4]

$$\frac{n P_2^2}{2\lambda} - f_2 < L_2 < \frac{n P_2^2}{2\lambda} + f_2 \qquad \text{(equation 2)}$$

Moreover, the distances $L_1$ and $L_2$ intensify lights maximally when satisfying the following equations 3 and 4 where a = b = c = d = 0.
[Formula 5]

$$L_1 = \frac{m P_1^2}{2\lambda} \qquad \text{(equation 3)}$$

[FORMULA 6]

$$L_2 = \frac{n P_2^2}{2\lambda} \qquad \text{(equation 4)}$$

Note that it is preferable that the adjust portion 7 of the optical element according to the present disclosure should be formed in such a way that the concavo-convex shape 20 and the light emitting unit maintain a predetermined distance therebetween with the formula 1 and the formula 2, preferably, the formula 3 and the formula 4 being taken into consideration.

Note that when the pitches $P_1$ and $P_2$ become too small relative to the wavelength $\lambda$ of light from the light source 80, it becomes difficult to cause diffraction to occur. Hence, as far as the sufficient lens 21 to cause diffraction to occur is present within the light distribution angle of the light source 80, it is preferable that the pitches $P_1$ and $P_2$ should be sufficiently larger than the wavelength $\lambda$ of light from the light source 80, and for example, be greater than or equal to 5 times, and preferably, be greater than or equal to 10 times.

Moreover, the above-described optical element to emit a dot pattern can be utilized not only for emitting a dot pattern but also for a diffuser application. When the optical element 2 is utilized for a diffuser application, the optical system device may be structured in which the light emitting unit 8 and the optical element are placed or integrated with each other in such a way that the distances $L_1$ and $L_2$ between the light emitting unit 8 and the focal point position 25 of the optical element do not satisfy at least the formula 1 and the formula 2, respectively.

[Manufacturing Method of Optical System Device]

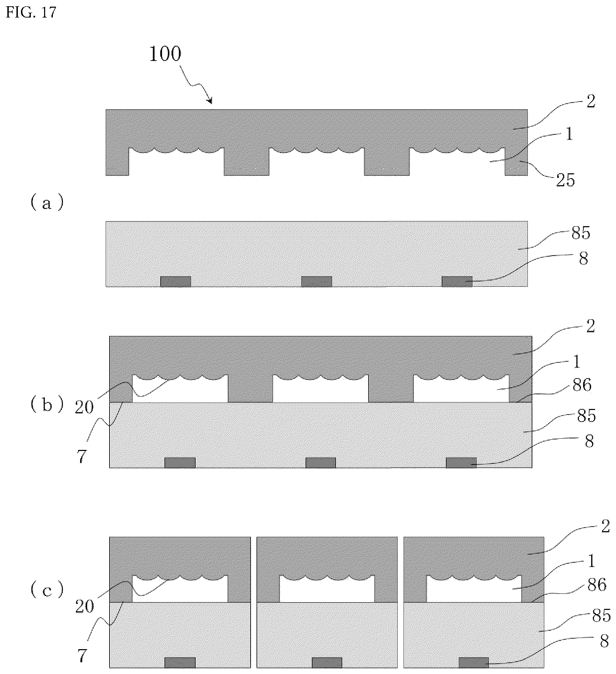

Next, a manufacturing method of the optical system device according to the present disclosure will be described. First, as illustrated in part (a) of FIG. 17, the light emitting unit 8 and the optical element are prepared and aligned as appropriate. Next, as illustrated in part (b) of FIG. 17, the adjust portion 25 is caused to abut the light emitting unit 8, and is bonded thereto. At this time, when the adjust portion 25 is formed in advance so as to have an appropriate height, by simply causing the adjust portion 25 to abut, alignment in the z direction can be carried out simultaneously. Note that the optical system device can have the light emitting unit 8 and the optical element 1 formed set by set, but as illustrated in FIG. 17, an optical element member having the plurality of optical elements integrally formed and a light emitting unit member having the plurality of light emitting units 8 integrally formed may be collectively laminated with each other. In this case, after the optical element member and the light emitting unit member are laminated and bonded with each other, those may be cut as illustrated in part (c) of FIG. 17 so as to be divided for each optical system device.

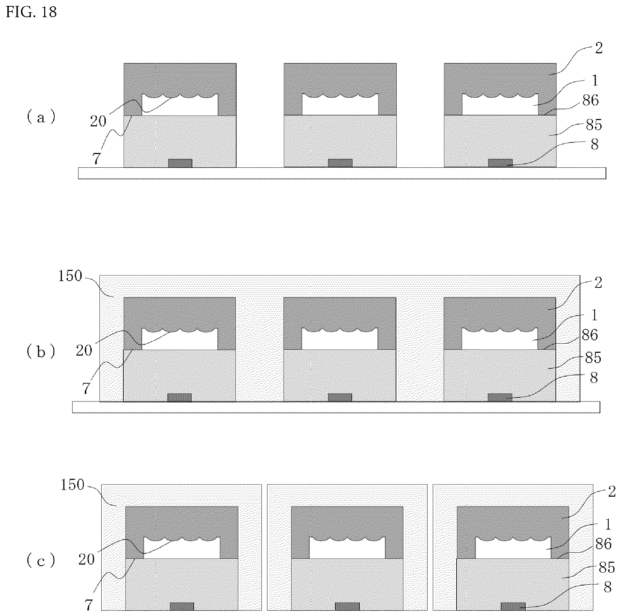

Moreover, when the cover 150 that encloses therein the optical element and the light emitting unit 8 is to be formed, for example, as illustrated in part (a) of FIG. 18, first, the optical system devices are placed on a substrate. Next, as illustrated in part (b) of FIG. 18, a material of the cover 150 with a flowability is supplied on the optical system devices, and is solidified to form the cover 150. Note that when the first medium layer 1 is a gaseous body, the above-described lateral member 25 is formed on the circumferential edge of the second medium layer 2 in such a way that a gaseous body which becomes the first medium layer 1 is sealed between the light emitting unit 8 and the second medium layer. This protects a space that becomes the first medium layer 1 so as to prevent the material of the cover 150 from entering therein.

Furthermore, the cover 150 can be formed for each optical system device, but as illustrated in FIG. 18, the cover 150 can be formed to the plurality of optical system device at a time. In this case, after the cover 150 is formed, as illustrated in part (c) of FIG. 18, may be cut and divided for each optical system device.

Still further, the other manufacturing method of the optical system device according to the present disclosure in which the first medium layer 1 is in common with a light source covering layer 85 will be described. This manufacturing method includes a first resin supplying process, a concavo-convex shape forming process, and a second medium layer forming process.

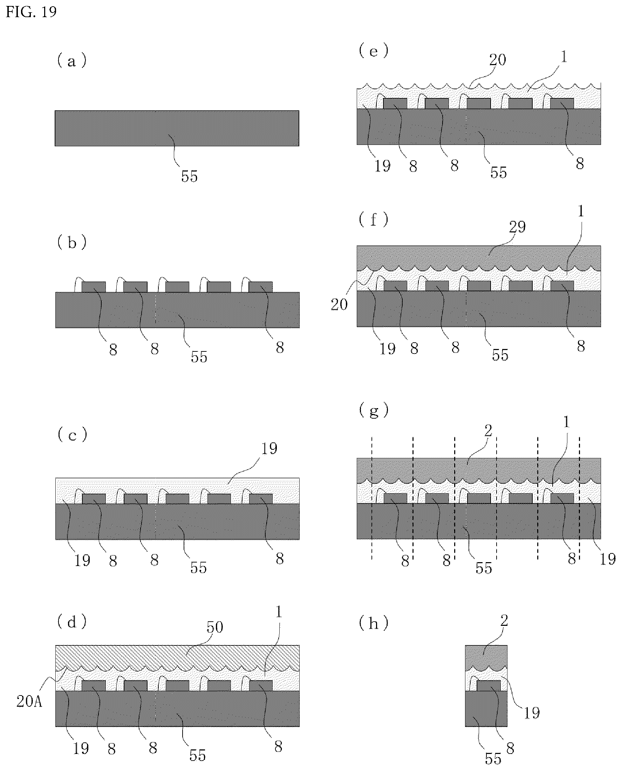

The first resin supplying process is to supply the material of the first medium layer 1 on the substrate on which the light emitting units are fastened. For example, a photocurable first resin 19 with a first refractive index is supplied. First, as illustrated in parts (a) and (b) of FIG. 19, the light emitting units 8 each like a VCSEL are fastened on a substrate 55 like a lead frame by die bonding, and are electrically connected thereto, so as to prepare the substrates 55 on which the light emitting units 8 are fastened. Next, as illustrated in part (c) of FIG. 19, the photocurable first resin 19 may be supplied to the light-emitting-unit-8 side of the substrate 55.

The concavo-convex shape forming process is to form the concavo-convex shape 20 on the surface of the first resin 19 by imprinting as illustrated in part (d) of FIG. 19, a mold 50 that has a pattern 20A of the concavo-convex shape 20 is pressed on the first resin 19 to form the concavo-convex shape 20 on the first resin 19. Next, as illustrated in part (e) of FIG. 19, the first resin 19 is cured and the mold 50 is demolded so as to form the first medium layer 1 with the first refractive index.

The second medium layer forming process is to supply the material of the second medium layer with the second refractive index that is higher than the first refractive index on the surface of the concavo-convex shape 20, and to form the second medium layer 2. More specifically, as illustrated in part (f) of FIG. 19, a photocurable second resin 29 is applied to a surface 21 of the concavo-convex shape 20. Next, as illustrated in part (g) of FIG. 19, the second resin 29 is cured to form the second medium layer 2 that has the second refractive index which is higher than the first refractive index.

The optical system devices formed as described above are divided as appropriate, and thus the optical system device as illustrated in part (h) of FIG. 19 can be manufactured.

REFERENCE SIGNS LIST

| | |
|---|---|
| 1 | First medium layer |
| 2 | Second medium layer |
| 3 | Third medium layer |
| 4A and 4B | Intermediate medium layer |
| 5 | Base material |
| 6 | Functional layer |
| 7 | Adjust portion |
| 8 | Light emitting unit |
| 11 | Boundary surface |
| 19 | First resin |
| 20 | Concavo-convex shape |
| 29 | Second resin |
| 61 | Aperture mask |
| 62 | Metal wiring |
| 63 | Insulation layer |
| 64 | Electrical conduction portion |
| 80 | Light source |
| 85 | Light emitting unit side medium layer |
| 150 | Cover |

**Claims**

**1.** An optical element comprising:

a first medium layer with a first refractive index;

a second medium layer with a second refractive index that is higher than the first refractive index; and

a concavo-convex shape at a boundary surface therebetween, the concavo-convex shape accomplishing an optical function,

wherein an adjust portion to maintain a certain distance from the concavo-convex shape is formed at a first-medium-layer side relative to the concavo-convex shape.

2.  The optical element according to claim 1, wherein:

the first medium layer is a gaseous body; and

the second medium layer and the adjust portion are integrally formed with each other by a second resin with the second refractive index.

3.  The optical element according to claim 1, wherein:

the second medium layer is formed of a second resin with the second refractive index; and

the first medium layer and the adjust portion are integrally formed with each other by a first resin with the first refractive index.

4.  The optical element according to any one of claims 1 to 3, wherein an opposite surface of the first medium layer or of the second medium layer to the boundary surface is formed in a planar shape or in a curved shape.

5.  The optical element according to any one of claims 1 to 3, further comprising an antireflection film formed on an opposite surface of the first medium layer or of the second medium layer to the boundary surface.

6.  The optical element according to any one of claims 1 to 3, wherein an opposite surface of the first medium layer or of the second medium layer to the boundary surface is provided with a fine concavo-convex structure that functions as a moth-eye.

7.  The optical element according to claim 1, further comprising a third medium layer formed on an opposite surface of the second medium layer to the boundary surface.

8.  The optical element according to claim 7, wherein the third medium layer is formed of a same material as the first medium layer.

9.  The optical element according to claim 1, wherein the first medium layer is formed on a base material.

10. The optical element according to claim 7, further comprising greater than or equal to one functional layer which is formed on an opposite surface of the base material to a surface thereof where the first medium layer is present, and which has a particular function.

11. The optical element according to claim 8, wherein the functional layer is an aperture mask.

12. The optical element according to claim 8, wherein the functional layer is a metal wiring.

13. The optical element according to claim 8, wherein the functional layer comprises:

a metal wiring formed on the base material;

an insulation layer formed on the metal wiring;

an aperture mask formed on the insulation layer; and

an electrical conduction portion that electrically connects the metal wiring and the aperture mask with each other.

14. The optical element according to claim 1, wherein the concavo-convex shape is formed in a shape having a plurality of lenses arrayed at regular intervals.

15. The optical element according to claim 1, capable of diffusing incident light to a predetermined diffusion range, wherein:

the diffusion range is defined as an interior of a simple closed curve;
the concavo-convex shape comprises a plurality of crests and valleys that have no regular interval;
the concavo-convex shape is formed so as not to have a portion where a gradient of the concavo-convex shape changes by 135 degrees within a width range that is $\lambda/(n_2-n_1)$ where $\lambda$ is a wavelength of the light, $n_1$ is the refractive index of the first medium layer, and $n_2$ is the refractive index of the second medium layer; and
the concavo-convex shape has a region that has a gradient causing incident light to be emitted to a region outside the diffusion range by Snell's law is smaller than or equal to 5 % of an entire region.

16. The optical element according to claim 13,
wherein the concavo-convex shape is formed in such a way that a distributed light distribution calculated by Snell's law becomes proportional to $\cos^{-n}\theta$ (where $1 \leq n \leq 7$) from a center of the diffusion range toward a boundary thereof.

17. An optical system device comprising:

the optical element according to any one of claims 1 to 3; and
a light emitting unit which is placed at a first-medium-layer side of the optical element, and which comprises a light source that emits light to the optical element,
wherein the optical element and the light emitting unit are laminated with each other through the adjust portion.

18. The optical system device according to claim 17, wherein the light emitting unit comprises a light source covering layer which is formed of a resin and which covers the light source.

19. The optical system device according to claim 17, further comprising a cover that encloses therein the optical element and the light emitting unit.

20. The optical system device according to claim 19, wherein the cover is at least partially formed of a material with a light blocking effect.

21. The optical system device according to claim 17, wherein:

the concavo-convex shape is formed in a shape in such a way that a plurality of lenses each allowing light with a wavelength $\lambda$ to pass therethrough is arrayed at regular intervals;
the light emitting unit comprises the light source that emits the light with the wavelength $\lambda$ to the plurality of lenses; and
a distance $L_1$ between the light emitting unit and a first focal plane of the lens, and a distance $L_2$ between the light emitting unit and a second focal plane satisfy the following equations, respectively, where m and n are each a natural number that is greater than or equal to 1, $f_1$ is a focal point distance by a cross-sectional shape of the lens perpendicular to a y direction, $f_2$ is a focal point distance by a cross-sectional shape of the lens perpendicular to an x direction, $P_1$ is a dimension of a pitch of the lenses in the x direction, and $P_2$ is a dimension of a pitch in the y direction.
[Formula 1]

$$\frac{m P_1^2}{2\lambda} - f_1 < L_1 < \frac{m P_1^2}{2\lambda} + f_1 \qquad \text{(equation 1)}$$

[Formula 2]

$$\frac{n P_2^2}{2\lambda} - f_2 < L_2 < \frac{n P_2^2}{2\lambda} + f_2 \qquad \text{(equation 2)}$$

**22.** A method for manufacturing an optical system device, the method comprising:

a laminating process of laminating, through the adjust portion with each other, the optical element according to any one of claims 1 to 3, and, a light emitting unit which is placed at a first-medium-layer side of the optical element and which comprises a light source that emits light to the optical element; and

a cover forming process of forming a cover that encloses therein the optical element and the light emitting unit.

**23.** A method for manufacturing an optical system device, the method comprising:

a first resin supplying process of supplying, on a substrate on which a light emitting unit is fastened, a photocurable first resin with a first refractive index;

a concavo-convex shape forming process of forming, on a surface of the first resin, a concavo-convex shape by imprinting; and

a second medium layer forming process of supplying and curing, on a surface of the concavo-convex shape, a photocurable second resin with a second refractive index that is higher than the first refractive index to form a second medium layer.

FIG. 1

FIG. 2

FIG. 3

( a )

( b )

( c )

( b )

FIG. 4

( a )

61

61a  5

( b )

5

63

62

FIG. 5

（a）

5

62

52

20

2A

8

80

（b）

2

1

51

5

20

52

62

8

80

FIG. 6

( a )

( b )

FIG. 7

FIG. 8

FIG. 9

FIG. 10

FIG. 11

FIG. 12

FIG. 13

(a)

(b)

(c)

FIG. 14

(a)

150
20
2
1
8

(b)

150
20
2
1
8

(c)

150
20
2
1
85
8

(d)

150
20
2
1
85
8

FIG. 15

(a)

(b)

(c)

FIG. 16

FIG. 17

100

(a)

2
1
25

85
8

(b) 20

7

2
1
86
85
8

(c) 20

7

2
1
86
85
8

FIG. 18

(a)

(b)

(c)

FIG. 19

( a )

55

( b )

8　8　55　8

( c )

19

19　8　8　55　8

( d )

50　1

20A

19　8　8　55　8

( e )

20　1

19　8　8　55　8

( f )

29　1

20

19　8　8　55　8

( g )

2　1

8　8　55　8　19

( h )

2

19

55　8

## INTERNATIONAL SEARCH REPORT

| | International application No. |
|---|---|
| | **PCT/JP2023/028540** |

**A.    CLASSIFICATION OF SUBJECT MATTER**

*G02B 3/00*(2006.01)i; *G02B 5/02*(2006.01)i
FI:    G02B3/00 A; G02B5/02 B

According to International Patent Classification (IPC) or to both national classification and IPC

**B.    FIELDS SEARCHED**

Minimum documentation searched (classification system followed by classification symbols)

G02B3/00-3/14; G02B5/00-5/136

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| P, X | WO 2023/090435 A1 (SCIVAX CORP) 25 May 2023 (2023-05-25)<br>paragraphs [0031], [0036], [0050], fig. 1-2 | 1-4, 14 |
| X | JP 2005-70666 A (SHARP CORP) 17 March 2005 (2005-03-17)<br>paragraphs [0046], [0062], [0065], fig. 3 | 1, 3-4, 14 |
| A | WO 2020/217943 A1 (NIPPON SHEET GLASS COMPANY, LIMITED) 29 October 2020<br>(2020-10-29)<br>entire text, fig. 1-12 | 1-4, 14 |
| A | WO 2021/230324 A1 (SCIVAX CORP) 18 November 2021 (2021-11-18)<br>entire text, fig. 1-70 | 1-4, 14 |

☐ Further documents are listed in the continuation of Box C.   ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **13 October 2023** | **24 October 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

# EP 4 567 477 A1

## INTERNATIONAL SEARCH REPORT

International application No.

**PCT/JP2023/028540**

**Box No. III    Observations where unity of invention is lacking (Continuation of item 3 of first sheet)**

This International Searching Authority found multiple inventions in this international application, as follows:

(1) The number of inventions included in the claims: 8

(2) Claim numbers of claims classified into each invention
    (Invention 1) Claims 1-4 and 14
    (Invention 2) Claims 5-6
    (Invention 3) Claims 7-8
    (Invention 4) Claims 9-13
    (Invention 5) Claims 15-16
    (Invention 6) Claims 17-21
    (Invention 7) Claim 22
    (Invention 8) Claim 23

(3) Regarding priority claim
    The feature in claim 1 in which "an adjustment portion is formed on the side of a first medium layer rather than a concave-convex shape so as to maintain a certain distance from the concave-convex shape" is not set forth in the description and the like of the earlier application (JP 2022-125808 A) which serves as the basis of the priority claim.
    Therefore, the effect of the priority claim based on the earlier application (JP 2022-125808 A) is not recognized for the invention in claims 1-22.

(4) Reasons for determining that the requirement of unity of invention is not satisfied
    Document 1: WO 2023/090435 A1 (SCIVAX CORP) 25 May 2023 (2023-05-25) paragraphs [0031], [0036], [0050], fig. 1-2 (Family: none)
    Document 2: JP 2005-70666 A (SHARP CORP) 17 March 2005 (2005-03-17) paragraphs [0046], [0062], [0065], fig. 3 (Family: none)

    Claims are classified into the following eight inventions.

(Invention 1) Claims 1-4 and 14
    Document 1 discloses the invention of an "optical element having a concave-convex shape (a periodic lens 21), which exhibits an optical function, at the interface between a first medium layer having a first refractive index and a second medium layer (an optical element 2) having a second refractive index higher than the first refractive index, wherein an adjustment portion (a lateral member 4) is formed on the side of the first medium layer rather than the concave-convex shape so as to maintain a certain distance from the concave-convex shape," the feature in which "the first medium layer is a gas, and the second medium layer and the adjustment portion are integrated with each other using a second resin having the second refractive index," the feature in which "the surface of the first medium layer or the second medium layer on the opposite side from the interface is planar or curved," and the feature in which "the concave-convex shape has a shape in which lenses are arranged periodically." Accordingly, claims 1-2, 4, and 14 lack novelty in light of document 1 and thus do not have a special technical feature.
    Document 2 discloses the invention of an "optical element (a first microlens array 6) having a concave-convex shape, which exhibits an optical function, at the interface between a first medium layer (a first resin layer 22) having a first refractive index and a second medium layer (a second resin layer 23) having a second refractive index higher than the first refractive index, wherein an adjustment portion (a first resin layer 22) is formed on the side of the first medium layer rather than the concave-convex shape so as to maintain a certain distance from the concave-convex shape," the feature in which "the second medium layer is made of a second resin (high refractive index ultraviolet curable resin) having a second refractive index, and the first medium layer and the adjustment portion are integrated with each other with a first resin (a low refractive index ultraviolet curable resin) having a first refractive index," the feature in which "the surface of the first medium layer or the second medium layer on the opposite side from the interface is planar or curved," and the feature in which "the concave-convex shape has a shape in which lenses are arranged periodically." Accordingly, claims 1, 3-4, and 14 lack novelty in light of document 2 and thus do not have a special technical feature.
    Therefore, claims 1-4 and 14 are classified as invention 1.

(Invention 2) Claims 5-6

Form PCT/ISA/210 (continuation of first sheet) (January 2015)

36

**INTERNATIONAL SEARCH REPORT**

International application No.

**PCT/JP2023/028540**

**Box No. III    Observations where unity of invention is lacking (Continuation of item 3 of first sheet)**

Claims 5-6 are dependent on claim 1 classified as invention 1. However, the specific problem to be solved by the invention, as understood from the technical feature added to claim 1, has little relevance to the problem to be solved by claim 1. Accordingly, claims 5-6 are not considered to be inventively related to claim 1.

Also, claims 5-6 are not substantially identical to or similarly closely related to any of the claims classified as invention 1.

Therefore, claims 5-6 cannot be classified as invention 1.

Also, claims 5-6 have the special technical feature in which "an anti-reflection film is provided on a surface of the first medium layer or the second medium layer on the opposite side from the interface" and "a fine concave-convex structure functioning as a moth eye is formed on a surface of the first medium layer or the second medium layer on the opposite side from the interface" and are thus classified as invention 2.

(Invention 3) Claims 7-8

Claims 7-8 are dependent on claim 1 classified as invention 1. However, the specific problem to be solved by the invention, as understood from the technical feature added to claim 1, has little relevance to the problem to be solved by claim 1. Accordingly, claims 7-8 are not considered to be inventively related to claim 1.

In addition, claims 7-8 are not substantially identical to or similarly closely related to any of the claims classified as invention 1 or invention 2.

Therefore, claims 7-8 cannot be classified as either invention 1 or invention 2.

Also, claims 7-8 have the special technical feature in which "a third medium layer is provided on a surface of the second medium layer on the opposite side from the interface," and are thus classified as invention 3.

(Invention 4) Claims 9-13

Claims 9-13 are dependent on claim 1 classified as invention 1. However, the specific problem to be solved by the invention, as understood from the technical feature added to claim 1, has little relevance to the problem to be solved by claim 1. Accordingly, claims 9-13 are not considered to be inventively related to claim 1.

Also, claims 9-13 are not substantially identical to or similarly closely related to any of the claims classified as invention 1 to invention 3.

Therefore, claim 9-13 cannot be classified as any one of invention 1 to invention 3.

Also, claims 9-13 have the special technical feature in which "the first medium layer is formed on a base material" and are thus classified as invention 4.

(Invention 5) Claims 15-16

Claims 15-16 are dependent on claim 1 classified as invention 1. However, the specific problem to be solved by the invention, as understood from the technical feature added to claim 1, has little relevance to the problem to be solved by claim 1. Accordingly, claims 15-16 are not considered to be inventively related to claim 1.

Also, claims 15-16 are not substantially identical to or similarly closely related to any of the claims classified as invention 1 to invention 4.

Therefore, claim 15-16 cannot be classified as any one of invention 1 to invention 4.

Also, claims 15-16 have the special technical feature of an "optical element capable of diffusing incident light into a certain diffusion range, wherein: the diffusion range is defined as the interior of a single closed curve on a certain plane; the concave-convex shape has a plurality of ridges and valleys without periodicity; the concave-convex shape does not have a portion, in which the slope of the concave-convex shape changes by 135 degrees, in a range in which the width of the light is $\lambda/(n2-n1)$, where $\lambda$ is the wavelength of the light, $n_1$ is the refractive index of the first medium layer, and $n_2$ is the refractive index of the second medium layer; and in the concave-convex shape, a region having a slope that causes incident light to be emitted to a region outside the diffusion range according to Snell's law accounts for 5% or less of the total region" and are thus classified as invention 5.

(Invention 6) Claims 17-21

Claims 17-21 are dependent on claim 1 classified as invention 1. However, the specific problem to be solved by the invention, as understood from the technical feature added to claim 1, has little relevance to the problem to be solved by claim 1. Accordingly, claims 17-21 are not considered to be inventively related to claim 1.

Also, claims 17-21 are not substantially identical to or similarly closely related to any of the claims classified as invention 1 to invention 5.

Therefore, claim 17-21 cannot be classified as any one of invention 1 to invention 5.

Also, claims 17-21 have the special technical feature of an "optical system device provided with: an optical element; and an irradiation unit disposed on the first medium layer-side of the optical element and including a light

Form PCT/ISA/210 (continuation of first sheet) (January 2015)

# EP 4 567 477 A1

## INTERNATIONAL SEARCH REPORT

International application No.

**PCT/JP2023/028540**

| Box No. III | Observations where unity of invention is lacking (Continuation of item 3 of first sheet) |
|---|---|

source that irradiates the optical element with light, wherein the optical element and the irradiation unit are stacked on each other with the adjustment portion therebetween" and are thus classified as invention 6.

(Invention 7) Claim 22
Claim 22 is dependent on claim 1 classified as invention 1. However, the specific problem to be solved by the invention, as understood from the technical feature added to claim 1, has little relevance to the problem to be solved by claim 1. Accordingly, claim 22 is not considered to be inventively related to claim 1.
Also, claim 22 is not substantially identical to or similarly closely related to any of the claims classified as inventions 1 to invention 6.
Thus, claim 22 cannot be classified as any one of invention 1 to invention 6.
Also, claim 22 has the special technical feature of a "method for manufacturing an optical system device, the method comprising: a stacking step of stacking an optical element and an irradiation unit on each other with the adjustment portion therebetween, wherein the irradiation unit is disposed on the first medium layer-side of the optical element and includes a light source that irradiates the optical element with light; and a cover part forming step of forming a cover part that encloses the optical element and the irradiation unit" and is thus classified as invention 7.

(Invention 8) Claim 23
It cannot be said that claim 23 has a technical feature identical or corresponding to that of claim 1 classified as invention 1.
In addition, claim 23 is not dependent on claim 1. Also, claim 23 is not substantially identical to or similarly closely related to any of the claims classified as inventions 1 to invention 7.
Therefore, claim 23 cannot be classified as any one of the invention 1 to invention 7.
Also, claim 23 has the special technical feature of a "method for manufacturing an optical system device, the method comprising: a first resin supply step of supplying a first resin, which is photocurable and has a first refractive index, onto a substrate on which an irradiation unit is fixed; a concave-convex shape forming step of forming a concave-convex shape on the surface of the first resin by an imprint method; and a second medium layer forming step of supplying a second resin, which is photocurable and has a second refractive index higher than the first refractive index, to the concave-convex shape and curing the result to thereby form a second medium layer" and is thus classified as invention 8.

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☑ No required additional search fees were timely paid by the applicant. Consequently, this international search report is restricted to the invention first mentioned in the claims; it is covered by claims Nos.: **claims 1-4 and 14**

**Remark on Protest** ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (January 2015)

## INTERNATIONAL SEARCH REPORT
### Information on patent family members

| International application No. |
| --- |
| **PCT/JP2023/028540** |

| Patent document cited in search report | Publication date (day/month/year) | Patent family member(s) | Publication date (day/month/year) |
| --- | --- | --- | --- |
| WO 2023/090435 A1 | 25 May 2023 | (Family: none) | |
| JP 2005-70666 A | 17 March 2005 | (Family: none) | |
| WO 2020/217943 A1 | 29 October 2020 | US 2022/0034477 A1 entire text, fig. 1-12G CN 113711089 A TW 202107123 A | |
| WO 2021/230324 A1 | 18 November 2021 | WO 2021/229848 A1 CN 115552278 A | |

Form PCT/ISA/210 (patent family annex) (January 2015)

39

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006500621 A
- WO 202326987 A